Europäisches Patentamt

(18) European Patent Office

Office européen des brevets

(11) Publication number: **0 158 100**
**B1**

(12) **EUROPEAN PATENT SPECIFICATION**

(45) Date of publication of patent specification: **07.06.89**

(51) Int. Cl.⁴: **G 21 C 7/10**

(21) Application number: **85102297.0**

(22) Date of filing: **01.03.85**

(54) **Poison rod for use in a nuclear reactor.**

(30) Priority: **28.03.84 US 594156**

(43) Date of publication of application:
**16.10.85 Bulletin 85/42**

(45) Publication of the grant of the patent:
**07.06.89 Bulletin 89/23**

(84) Designated Contracting States:
**BE CH DE FR GB LI SE**

(56) References cited:
**EP-A-0 029 399**
**FR-A-2 041 723**
**FR-A-2 313 743**
**US-A-4 169 760**

(73) Proprietor: **WESTINGHOUSE ELECTRIC CORPORATION**
**Westinghouse Building Gateway Center**
**Pittsburgh Pennsylvania 15222 (US)**

(72) Inventor: **Paul, Gary Edward**
**350 Deauville Drive, Apt. 6**
**Monroeville Pennsylvania 15146 (US)**
Inventor: **Carr, Ronald Harra**
**2524 Columbia Avenue**
**Pittsburgh Pennsylvania 15218 (US)**
Inventor: **Stern, Lee William**
**111 Spring Grove Road**
**Pittsburgh Pennsylvania 15235 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

This invention relates to a burnable-poison rod for use in a nuclear reactor and having a predetermined length enabling it to be handled by means of equipment designed for handling full-length rods, said burnable-poison rod including a tubular cladding with end plugs at the upper and lower ends thereof, having regard to the relative disposition of said ends with respect to each other when the rod is in use, and which tubular cladding contains a tubular neutron absorbing member positioned therein in coaxial and laterally spaced relationship therewith.

As well known in the art, nuclear fission involves the disintegration of fissile nuclear material into two or more fission products of lower mass number. Among other things, the fissioning process results in a net increase in the number of available free neutrons which are needed for a self-sustaining reaction. When a reactor has operated for a period of time, the fissile material becomes depleted, and the fuel assembly must ultimately be replaced. Since replacing a fuel assembly is a timeconsuming and costly operation, it is desirable to extend the life of a given fuel assembly for as long as practically feasible. This is commonly done by initially providing an excess of reactor fuel and deliberately adding calculated small amounts of parasitic neutron-capturing elements, usually referred to as "burnable poisons" or "burnable absorbers" if they have a high probability (or cross section) for absorbing neutrons while producing no new or additional neutrons or changing into new absorbers as a result of neutron absorption.

During the early stages of reactor operation, excessive neutrons are absorbed by the burnable absorber which consequently undergoes transformation into elements of low neutron cross-section which do not substantially affect the reactivity of the fuel assembly in the latter period of its life when the availability of fissile material is lower. Thus, the burnable absorber compensates for the excess of fissile material during the early life of the fuel assembly but becomes progressively less active as a neutron absorber during the latter part of the life cycle so that the life of the fuel assembly is prolonged while the fission level remains relatively constant.

Burnable absorbers which may be used include boron, gadolinium, samarium, europium, and similar materials which, upon the absorption of neutrons, eventually change into isotopes of sufficiently low neutron capture cross section to be substantially transparent to neutrons.

The incorporation of burnable absorbers in fuel assemblies has been recognized in the nuclear fuel art as an effective means of increasing fuel capacity and extending core life. Burnable absorbers are used either uniformly mixed with the fuel as so-called distributed absorbers or as separate elements placed in the reactor and so arranged that they will burn out or become depleted at about the same rate as the fuel, whereby the net reactivity of the core is maintained relatively constant over the active life of the core.

When burnable absorbers are to be utilized as discrete, separate elements, they are usually contained in a cladding tube, and this whole assembly is called a burnable poison rod. It is common practice to insert poison rods for use into empty control-rod guide thimbles in the fuel assembly, that is to say, into guide thimbles in which no control rods are required and which, therefore, are empty and hence available for receiving poison rods.

U.S. Patent Specification No. 4,342,722 discloses a poison rod for use in the above manner. However, the poison rod disclosed therein is of a full-length design whereas there are applications which require the use of shorter or partial-length poison rods containing less neutron absorber positioned so as to be near the center of the nuclear core height when in use. It would seem logical to propose meeting this requirement simply by providing a shortened version of a full-length rod, but this solution has proved unsatisfactory insofar as poison rods having a reduced length are not compatible with existing handling equipment and require costly modifications to be made to same in order to render it capable of handling the shortened rods.

US—A—4 169 760 discloses a control rod to be used as a part length rod to control xenon induced power oscillations and also to contribute to shut down reactivity when a rapid shutdown of the reactor is required. This control rod consists of three regions. The lower control region is a longer weaker active portion separated from an upper stronger shorter poison section by an intermediate section which is a relative non-absorber of neutrons and may be a water-filled tube.

Therefore, it is the principal object of the invention to provide a poison rod which is suitable for use as a partial-length rod as well as compatible with existing handling equipment, and which, in addition, will minimize the amount of neutron moderator displaced by it when used in a fuel assembly.

The invention accordingly resides in a burnable poison rod as mentioned above which is characterised in that said tubular cladding has disposed therein a spacing means which supports the neutron absorbing member in axially spaced relationship with respect to said lower end plug so as to confine the neutron absorbing member to a first section of the rod which extends from the upper end plug for only part of said predetermined length, thereby enabling said rod to be utilized as a partial-length poison rod, said burnable-poison rod including a second section which extends from said first section for the remainder of said predetermined length and includes a portion of said tubular cladding which defines an internal space for containing a neutron moderator.

"Predetermined length" in this context means, of course, the full length of the poison rod enabling the latter to be handled with existing equipment without necessitating modification of same. Moreover, constructing the second section of the rod, i.e. the section making up the physical difference between partial length and full length, for containment therein of a neutron moderator will minimize the amount of neutron moderator replaced by the full-length rod of the invention acting as a partial-length poison rod.

In one preferred embodiment of the invention, the second section of the poison rod contains a solid mass of neutron moderating material, such as carbon, graphite, beryllium or the like, which also serves as a spacer supporting the neutron absorbing means in the first section in spaced relation with respect to the closure means, or end plug, at the end of the second section of the poison rod.

In a second preferred embodiment of the invention, the interior of the first rod section is separated from the internal space in the second section by means of a plug, and said internal space is adapted to contain a liquid neutron moderator. More particularly, said internal space is in fluid flow communication with the ambient, preferably through flow apertures or passages formed in the cladding portion and/or the closure means pertaining to the second section of the poison rod, so as to receive moderating liquid from the reactor in which the poison rod is employed and which utilizes such moderating liquid, e.g. water, as a coolant.

The preferred embodiments of the invention will now be more fully described, by way of example only, with reference to the accompanying drawings, in which:

Fig. 1 is a cross-sectional view of a poison rod representing one embodiment of the invention;

Fig. 2 is a similar view of a poison rod representing the other embodiment of the invention; and

Fig. 3 is a view, in elevation and partially in section, of a nuclear fuel assembly illustrating the use of a poison rod such as shown in Fig. 1 or 2.

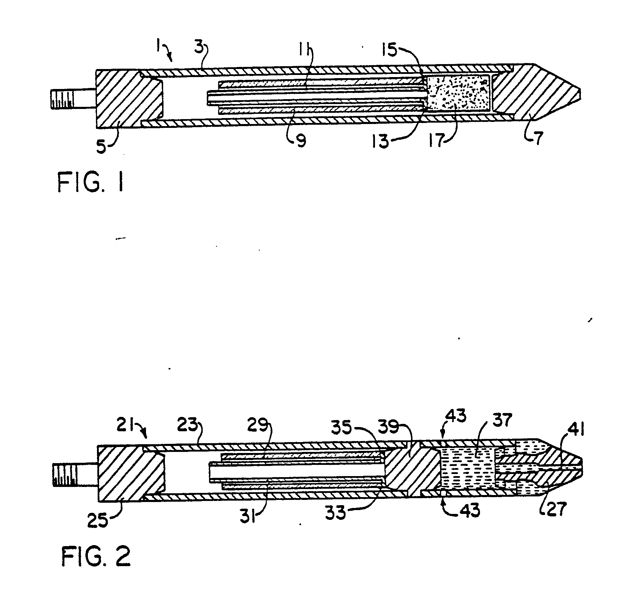

With particular reference to Fig. 1, the poison rod illustrated therein and designated with reference numeral 1 includes a tubular cladding 3 made of a suitable metal, e.g. stainless steel or a zirconium alloy, such as zircaloy, and having closure means 5 and 7 disposed at the opposite ends thereof. For convenience, these closure means, or end plugs, will be referred to herein as upper and lower closure means 5 and 7, respectively, having regard to their disposition when the poison rod is in use. The tubular cladding 3 contains neutron absorbing means 9, such as borosilicate tube, and an elongate metallic member 11 in the form of a tube of stainless steel, for example, which extends through the borosilicate tube 9 and supports it laterally in spaced relationship with repect to the cladding 3. At its lower (right-hand, as shown in Fig. 1) end, the metallic tube 11 has an outwardly directed radial flange 13 which supports the absorber tube 9 axially at the lower end 15 thereof.

Likewise disposed within the cladding 3 is a solid, generally cylindrical mass 17 of a neutron moderating material, such as graphite or carbon, for example, which in addition to moderating fast neutrons also serves as a spacer maintaining the neutron absorber tube 9, together with the metallic tube 11 therein, in spaced relation with respect to the lower closure means 7. The section of the poison rod 1 extending from the upper (left-hand) end of the poison rod to the neutron moderating mass 17 will be referred to herein as the first section, and the remainder of the rod containing the mass 17 and extending to the lower (right-hand) end of the rod will be referred to as the second section of the rod.

The second embodiment of the invention, illustrated in Fig. 2, comprises a poison rod 21 which includes a tubular metallic cladding 23 having closure means 25 and 27 at its opposite ends and containing a neutron absorber 29, such as a borosilicate glass tube, together with an elongate metallic member 31 in the form of a tube of stainless steel, for example, which extends through the neutron absorber tube 29 and has an outwardly extending radial flange 33 abutting the lower end 35 of the absorber tube 29. This first section of the poison rod 21 corresponds to the first section of the poison rod 1 of the first embodiment. As distinct from the latter, the poison rod 21 includes a plug 39 which sealingly separates the interior of the first section from the internal space within the second section; and the neutron moderator 37 in this case is a liquid admitted to the internal space of the second section through flow apertures 43 formed in the cladding portion pertaining to this second rod section, and through an axial aperture or passage 41 formed in the lower (right-hand) closure means or end plug 27. With the internal space of the second section thus in fluid flow communication with the ambient, it will receive neutron moderating liquid from the reactor in which the poison rod 21 is used and which employs such liquid, e.g. water, as a coolant. The intermediate plug 39, which either may be sealed between two separate cladding sections suitably joined thereto, as shown, or may be fitted into grooves (not shown) formed in the inner wall of unitary cladding extending substantially for the full length of the rod, lends axial support to the assembly consisting of the metallic tube 31 with the neutron absorber tube 29 thereon, and thus maintains this assembly in spaced relationship with respect to the lower closure means 27.

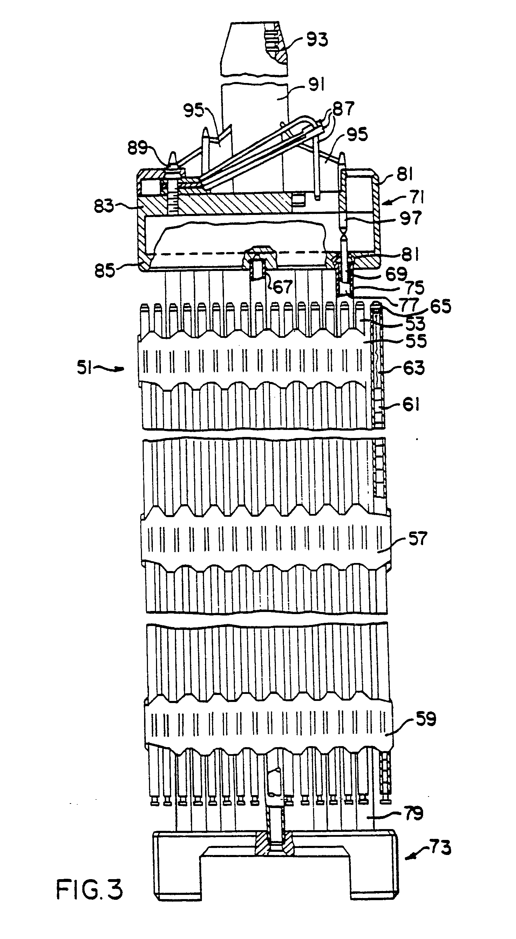

The burnable poison rods embodying the invention are usable in a nuclear fuel assembly employing conventional handling equipment. As illustrated in Fig. 3, the nuclear fuel assembly 51 shown therein includes an array of fuel rods 53 held spaced apart by means of grids 55, 57 and 59 (only three are shown in Fig. 3) spaced along the fuel assembly length. Each fuel rod contains nuclear fuel pellets 61 and a spring 63 located in the plenum of the fuel rod, and its opposite ends of the rods are closed with end plugs, such as plug 65.

Control rods 67 and poison rods 69 are reciprocally movable in guide tubes or guide thimbles 77 located at predetermined positions in each selected fuel assembly in the reactor, the guide thimbles being suitably attached to the grids 55, 57 and 59. The reactor includes further a top nozzle 71 and a bottom nozzle 73 to which opposite ends of the control rod guide thimbles are attached so as to form an integral assembly capable of being conventionally handled without damaging the assembly components.

Typically, the guide thimbles have sleeves, such as sleeves 75 and 79, for weld compatibility with the upper 55 and lower 59 grids and with the top 71 and bottom 73 nozzles. Thus, and as seen from Fig. 3, a sleeve 75 is used to join the guide thimble 77 to the upper grid 55 and to the top nozzle 71. Each guide thimble 77 extends the full length of the fuel assembly 51 between the top nozzle 71 and the bottom nozzle 73, whereas the sleeve 75 extends only from the top nozzle 71 to the upper grid 55, and the sleeve 79 extends only from the bottom nozzle 73 to the lower grid 59. The guide thimble 77 is attached to the sleeves 75 and 79 in a well-known manner.

As illustrated, the top nozzle 71 is square in cross section and comprises a housing 81 having an upper plate 83 spaced from a (lower) adapter plate 85. Assembly hold-down springs 87 attached to opposite sides of upper plate 83 are held in place by bolts 89 and adapted to be compressed when the reactor upper core plate (not shown) is placed in position. The top nozzle includes further a rod cluster control assembly 91 comprising an internally threaded cylindrical member 93 having radially extending flukes or arms 95 which include connectors 97 to which the respective control rods 67 and poison rods 69 are attached, the arrangement being such that the rod cluster assembly is movable to vertically position the control rods and poison rods in the guide thimbles so as to control the fission process in the assembly as desired.

**Claims**

1. A burnable-poison rod (1, 21) for use in a nuclear reactor and having a predetermined length enabling it to be handled by means of equipment designed for handling full-length rods, said burnable-poison rod including a tubular cladding (3, 23) with end plugs (5, 7; 25, 27) at the upper and lower ends thereof, having regard to the relative disposition of said ends with respect to each other when the rod is in use, and which tubular cladding contains a tubular neutron absorbing member (9, 29) positioned therein in coaxial and laterally spaced relationship therewith, characterized in that said tubular cladding (3, 23) has disposed therein a spacing means (17, 39) which supports the neutron absorbing member (9, 29) in axially spaced relationship with respect to said lower end plug (7, 27) so as to confine the neutron absorbing member to a first section of the rod (1, 21) which extends from the upper end plug (5, 25) for only part of said predetermined length, thereby enabling said rod to be utilized as a partial-length poison rod, said burnable-poison rod including a second section which extends from said first section for the remainder of said predetermined length and includes a portion of said tubular cladding (3, 23) which defines an internal space for containing a neutron moderator (17, 37).

2. A burnable-poison rod according to claim 1, characterized in that said spacing means is a solid mass (17) of neutron moderating material disposed in said internal space and constituting said neutron moderator.

3. A burnable-poison rod according to claim 2, characterized in that said neutron moderating material (17) is selected from the group consisting of graphite, carbon, and beryllium.

4. A burnable-poison rod according to claim 1, characterized in that said spacing means is a plug (39) which separates the interior of said first section from said internal space in the second section, said internal space being in fluid flow communication (41, 43) with the ambient to receive therefrom said neutron moderator (37) in liquid form.

5. A burnable-poison rod according to claim 4, characterized in that said lower end plug (27) and the cladding portion pertaining to said second section have flow passages (41, 43) which provide said fluid flow communication between said internal space and the ambient.

6. A burnable-poison rod according to claim 4 or 5, characterized in that the neutron moderating liquid (37) is reactor coolant.

7. A burnable-poison rod according to any one of the preceding claims, characterized in that said tubular neutron absorbing member (9, 29) comprises borosilicate glass tube.

8. A burnable-poison rod according to claim 7, characterized in that said borosilicate glass tube (9, 29) has extending therethrough an elongate metallic member (11, 31) which is supported on said spacing means (17, 39) and supports the borosilicate glass tube in said laterally spaced relationship with respect to the tubular cladding (3, 23).

9. A burnable-poison rod according to claim 8, characterized in that said elongate metallic member (11, 31) has an outwardly directed radial flange (13, 33) which rests upon said spacing means (17, 39) and axially supports the borosilicate glass tube (9, 29).

**Patentansprüche**

1. Abbrennbarer Neutronengiftstab (1, 21) zum Einsatz in einem Kernreaktor und mit einer vorgegebenen Länge, die seine Handhabung mittels einer zur Handhabung von Stäben voller Länge ausgelegten Ausrüstung ermöglicht, wobei der abbrennbare Neutronengiftstab eine rohrförmige Hülle (3, 23) mit Endkappen (5, 7; 25, 27) an deren oberen und unteren Enden mit Bezug auf deren relativer Lage im Einsatz des Neutronengiftstabs aufweist und wobei die rohrförmige Hülle ein rohrförmiges Neutronenabsorberelement (9, 29) enthält, das darin koaxial und mit seitlichem Abstand angeordnet ist, dadurch gekennzeichnet, daß die rohrförmige Hülle (3, 23) einen darin angeordneten Abstandhalter (17, 39) enthält, der das Neutronenabsorberelement (9, 29) in axialem Abstand von der unteren Endkappe (7, 27) hält, so daß das Neutronenabsorberelement auf einen ersten Abschnitt des Stabes (1, 21) begrenzt ist, der sich von der oberen Endkappe (5, 25) über nur einen Teil der vorgegebenen Länge erstreckt, so daß der Stab als Neutronengiftstab mit Teillänge eingesetzt werden kann, und daß der abbrennbare Neutronengiftstab einen zweiten Abschnitt aufweist, der sich von dem ersten Abschnitt über den Rest der vorgegebenen Länge erstreckt und einen Abschnitt der rohrförmigen Hülle (3, 23) umfaßt, der einen inneren Hohlraum zur Aufnahme eines Neutronenmoderators (17, 37) bildet.

2. Abbrennbarer Neutronengiftstab nach Anspruch 1, dadurch gekennzeichnet, daß der Abstandhalter als feste Masse (17) aus Neutronenmoderatormaterial ausgebildet ist, das in dem inneren Hohlraum angeordnet ist und den Neutronenmoderator bildet.

3. Abbrennbarer Neutronengiftstab nach Anspruch 2, dadurch gekennzeichnet, daß das Neutronenmoderatormaterial (17) aus der Gruppe Graphit, Kohlenstoff und Beryllium ausgewählt ist.

4. Abbrennbarer Neutronengiftstab nach Anspruch 1, dadurch gekennzeichnet, daß der Abstandhalter ein Stopfen (39) ist, der das Innere des ersten Abschnitts von dem inneren Hohlraum im zweiten Abschnitt trennt, wobei der innere Hohlraum in Strömungsverbindung (41, 43) mit seiner Umgebung steht, um von dort den Neutronenmoderator (37) in flüssiger Form aufzunehmen.

5. Abbrennbarer Neutronengiftstab nach Anspruch 4, dadurch gekennzeichnet, daß die untere Endkappe (27) und der zum zweiten Abschnitt gehörende Teil der Hülle Strömungskanäle (41, 43) aufweisen, welche die Strömungsverbindung zwischen dem inneren Hohlraum und der Umgebung herstellen.

6. Abbrennbarer Neutronengiftstab nach Anspruch 4 oder 5, dadurch gekennzeichnet, daß die Neutronenmoderatorflüssigkeit (37) Reaktorkühlmittel ist.

7. Abbrennbarer Neutronengiftstab nach einem der vorhergehenden Ansprüche, dadurch gekennzeichnet, daß das rohrförmige Neutronenabsorberelement (9, 29) ein Borsilikatglasrohr ist.

8. Abbrennbarer Neutronengiftstab nach Anspruch 7, dadurch gekennzeichnet, daß durch das Borsilikatglasrohr (9, 29) ein langgestrecktes Metallelement (11, 31) hindurchverläuft, das auf dem Abstandhalter (17, 39) abgestützt ist und das Borsilikatglasrohr mit dem genannten seitlichen Abstand von der rohrförmigen Hülle (3, 23) abstützt.

9. Abbrennbarer Neutronengiftstab nach Anspruch 8, dadurch gekennzeichnet, daß das langgestreckte Metallelement (11, 31) einen auswärts weisenden Radialflansch (13, 33) aufweist, der auf dem Abstandhalter (17, 39) aufsitzt und das Borsilikatglasrohr (9, 29) axial abstützt.

## Revendications

1. Barre de poison consommable (1, 21) pour une utilisation dans un réacteur nucléaire et ayant une longueur prédéterminée lui permettant d'être manoeuvrée au moyen d'un équipement conçu pour manoeuvrer des barres formées d'une seule pièce, ladite barre de poison consommable comprenant un gainage tubulaire (3, 23) ayant des bouchons d'extrémite (5, 7; 25, 27) à ses extrémités supérieure/et inférieure, compte tenu de la disposition relative desdites extrémités l'une par rapport à l'autre lorsque la barre est utilisée, ce gainage tubulaire contenant un élément tubulaire (9, 29) d'absorption de neutrons, placé à l'intérieur de ce gainage dans une disposition coaxiale et latéralement espacée vis-à-vis de ce dernier, caractérisée par le fait que ledit gainage tubulaire (3, 23) comporte intérieurement un dispositif d'espacement (17, 39), qui supporte l'élément (9, 29) d'absorption de neutrons dans une disposition axialement espacée par rapport audit bouchon (7, 27) d'extrémité inférieure (7, 27) de manière à limiter l'élément d'absorption de neutrons à une première section de barre (1, 21) qui s'étend à partir du bouchon (5, 25) d'extrémité supérieure sur seulement une partie de ladite longueur prédéterminée, en permettant ainsi que ladite barre soit utilisée comme barre de poison de longueur partielle, ladite barre de poison consommable comprenant une seconde section qui s'étend à partir de ladite première section sur le reste de la longueur prédéterminée et comprend une portion dudit gainage tubulaire (3, 23) qui délimite un espace interne pouvant contenir un modérateur (17, 37) de neutrons.

2. Barre de poison consommable selon la revendication 1, caractérisée par le fait que ledit dispositif d'espacement est une masse solide (17) d'un matériau modérateur de neutrons disposé dans ledit espace interne et constituant ledit modérateur de neutrons.

3. Barre de poison consommable selon la revendication 2, caractérisée par le fait que ledit matériau (17) modérateur de neutrons est sélectionné à partir du groupe comprenant le graphite, le carbone et le béryllium.

4. Barre de poison consommable selon la revendication 1, caractérisée par le fait que ledit dispositif d'espacement est un bouchon (39) qui sépare dudit espace interne de la seconde section l'intérieur de ladite première section, ledit espace interne étant en communication d'écoulement de fluide (41, 43) avec l'espace ambiant pour en recevoir ledit modérateur (37) de neutrons sous une forme liquide.

5. Barre de poison consommable selon la revendication 4, caractérisée par le fait que ledit bouchon (27) d'extrémité inférieure (27) et la portion de gainage se rapportant à ladite seconde section ont des passages d'écoulement (41, 43) qui permettent ladite communication d'écoulement de fluide entre ledit espace interne et l'espace ambiant.

6. Barre de poison consommable selon la revendication 4 ou 5, caractérisée par le fait que le liquide (37) modérateur de neutrons est un caloporteur pour réacteur nucléaire.

7. Barre de poison consommable selon l'une quelconque des revendications précédentes, caractérisée par le fait que ledit élément tubulaire (9, 29) d'absorption de neutrons comprend un tube de verre de borosilicate.

8. Barre de poison consommable selon la revendication 7, caractérisée par le fait que ledit tube (9, 29) de verre de borosilicate traverse sur toute sa longueur un élément métallique allongé (11, 31) qui est supporté par lesdits dispositifs d'espacement (17, 39) et supporte le tube de verre de borosilicate dans une disposition latéralement espacée par rapport au gainage tubulaire (3, 23).

9. Barre de poison consommable selon la revendication 8, caractérisée par le fait que l'élément métallique allongé (11, 31) a un rebord radial (13, 33) orienté vers l'extérieur, qui repose sur lesdits dispositifs d'espacement (17, 39) et qui supporte axialement le tube (9, 29) en verre de borosilicate.

FIG. 1

FIG. 2

FIG.3